# EUROPEAN PATENT APPLICATION

(11) **EP 2 378 483 A1**
(43) Date of publication of application: **19.10.2011**
(21) Application number: 11161983.9
(22) Date of filing: 12.04.2011
(51) Int. Cl.: G06Q 50/00, G06Q 10/00

(54) **System and method for scheduling demand response events in a network**

(30) Priority: 19.04.2010 US 325728 P; 28.05.2010 US 790655
(71) Applicant: General Electric Company, Schenectady, NY 12345 (US)
(72) Inventor: Tyagi, Rajesh, Niskayuna, NY 12309 (US); Black, Jason Wayne, Niskayuna, NY 12309 (US)
(74) Representative: Illingworth-Law, William Illingworth

(57) **Abstract**

A system (100) and method for receiving demand response data and for grouping customers into customer groups based on the demand response data. One or more of the customer groups is scheduled for a demand response event based on the demand response data and forecast data. The selected customer groups are notified and the demand response is implemented for the selected customer groups.

## Description

### BACKGROUND

Demand response refers to mechanisms used to encourage/induce utility consumers to curtail or shift their individual demand in order to reduce aggregate utility demand during particular time periods. For example, electric utilities employ demand response programs to reduce peak demand for electricity. Demand response programs typically offer customers incentives for agreeing to reduce their demand during certain time periods. Many of these programs (e.g., critical peak pricing) stipulate that the utilities can invoke only a limited number of demand response/curtailment events over a given time period (e.g., 20 per year) and also limit the time duration (e.g., minutes, hours) for each particular event. Further, each demand response event typically includes all of the customers participating in the demand response program. Calling a demand response (DR) event for all customers is likely sufficient when a relatively small fraction of customers are participating. However, as the number of participants increases, utilities can achieve improved benefits by invoking DR events for a subset of participants each time. This will enable the utilities to call events more often without exceeding the contract terms, and will avoid excessive load reductions and/or rebound peaks.

Given that DR programs typically limit the number of opportunities to reduce load, utilities would like to maximize the benefits for each opportunity / event. These benefits include reducing generation / procurement costs and outages. Due to the complexity of estimating these benefits for a particular opportunity, utilities typically use simple heuristic based trigger criteria, such as temperature or reserve margin, to determine when to invoke a demand response or curtailment event. However, when combined with the current practice of including all participating customers in each event, this approach does not enable utilities to optimize their benefits from the limited opportunities for DR events.

For these and other reasons, there is a need for the present invention.

### BRIEF DESCRIPTION

A system and method for receiving demand response data and for grouping customers into customer groups based on the demand response data. One or more of the customer groups is scheduled for a demand response event based on the demand response data and forecast data. The selected customer groups are notified and the demand response is implemented for the selected customer groups.

### BRIEF DESCRIPTION OF THE DRAWINGS

The nature and various additional features of the invention will appear more fully upon consideration of the illustrative embodiments of the invention which are schematically set forth in the figures. Like reference numerals represent corresponding parts.
FIG. 1 illustrates a utility management system according to an embodiment of the invention;
FIG. 2 illustrates a utility management system according to another embodiment of the invention;
FIG. 3 illustrates a flow diagram of a grouping process according to an embodiment of the invention;
FIG. 4 illustrates a flow diagram of an updating process according to an embodiment of the present invention;
FIG. 5 illustrates a flow diagram of a demand response scheduling process according to an embodiment of the present invention;
FIG. 6 illustrates a flow diagram of a demand response event optimization process according to another embodiment of the present invention; and
FIG. 7 shows a graph of an exemplary group selection according to an exemplary embodiment of the invention; and

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

### DETAILED DESCRIPTION

The embodiments described herein are directed to an energy management system and method that enable utilities to optimize the use of demand response or curtailment events during certain periods of time. While embodiments of the invention will be described in the context of energy or electric utilities and power grid operations, it will be appreciated by those skilled in the art that the system and method can be used for other purposes or utilities as well.

As used herein, the term "module" refers to software, hardware, or firmware, or any combination of these, or any system, process, or functionality that performs or facilitates the processes described herein.

The demand response management system and method according to embodiments of the invention allow utilities to optimize the scheduling and dispatch of demand response events. Embodiments of the invention determine the optimal selection of customers to include in the demand response event as well as the times and durations for each customer.

Demand response programs such as critical peak pricing (CPP), Variable Peak Pricing (VPP), Direct Load Control (DLC), and other various incentive programs are examples of demand response programs with contractual specifications as to when, how often, and the duration that a utility can designate a demand response event for a participating customer. For example, a contract may specify that the utility can invoke up to 15 events per year, where each event will occur between the hours of 12 pm and 6 pm with a maximum of 60 total hours per year. According to embodiments of the invention, the utility can choose to use 10 events of 6 hours each, or 15 events of 4 hours each, or any other such combination of events and hours to stay within the 15 event, 60 hour limitations for each customer.

In this example, assume that the utility has 100,000 customers participating in the demand response program. In addition, the utility can designate a subset of the participating customers to be included in each event. By using only 50,000 customers per event instead of the full 100,000, for example, the utility can double the total number of events. Day-to-day variation in weather and other factors will also change the most advantageous hours over which to invoke a DR event. For instance, on some days a six hour event may be needed due to continuous hot weather, while on others, relatively fast temperature changes (i.e., due to a front moving in) may reduce the most beneficial number of hours to four. By enabling the optimal selection of the number of customers, along with their specific timing and duration, for any event, embodiments of the invention maximize the utility's benefits from each event opportunity.

Embodiments of the system and method operate by evaluating the expected benefits (e.g., determined by generation cost, market prices, or other costs to serve load) for the utility or load serving entity for invoking a demand response event during a particular day. This evaluation determines the marginal savings/benefit for each opportunity within the day or period of interest, where an opportunity includes an customer-time period pairing. The time period can be any time period such as minutes or hours, for example. If the estimated marginal benefit of a particular customer-time period exceeds the expected future benefit from holding or saving that opportunity to use in a future event period, then that customer-time period is selected or scheduled for use within the current event period. The marginal benefit calculation incorporates both the expected load reduction for the customer-time period as well as the rebound of that load into subsequent time periods. Based on this analysis, embodiments of the system and method according to the present invention determine the best set of customers and their individually associated time periods for which to designate a demand response event on the current day or period. The set of customers may be staggered across different time periods so as to maximize the total benefits, while ensuring that the marginal benefits of each selected customer-time period exceed the opportunity to use them in the future. The staggering of customers across different time periods is especially useful when large rebound effects exist.

The expected future benefits of a customer-time period can be calculated based upon the price/cost volatility, relevant forecasts (e.g., weather, load, generation availability, etc.), and other parameters that determine the probability distribution of future benefits. The expected future benefits represent the benefits from utilizing the opportunities in future time periods.

According to embodiments of the invention, customers are segmented into customer groups, and the decision of whether to invoke a demand response event will be made at the group level so that the event participation decision for a group applies to all of the customers in that group. The number of groups and the size of each group can be determined by each utility or service provider. However, the groupings should meet certain characteristics. For example, each group should be phase balanced, the customers in each group should have similar preferences for event timings and duration, and the size of a group should not be so large that by itself it creates a rebound effect large enough to create a new or nearly new peak, for example. The customer groupings can be updated as necessary to accommodate new programs, contracts or customer participants, and other variables.

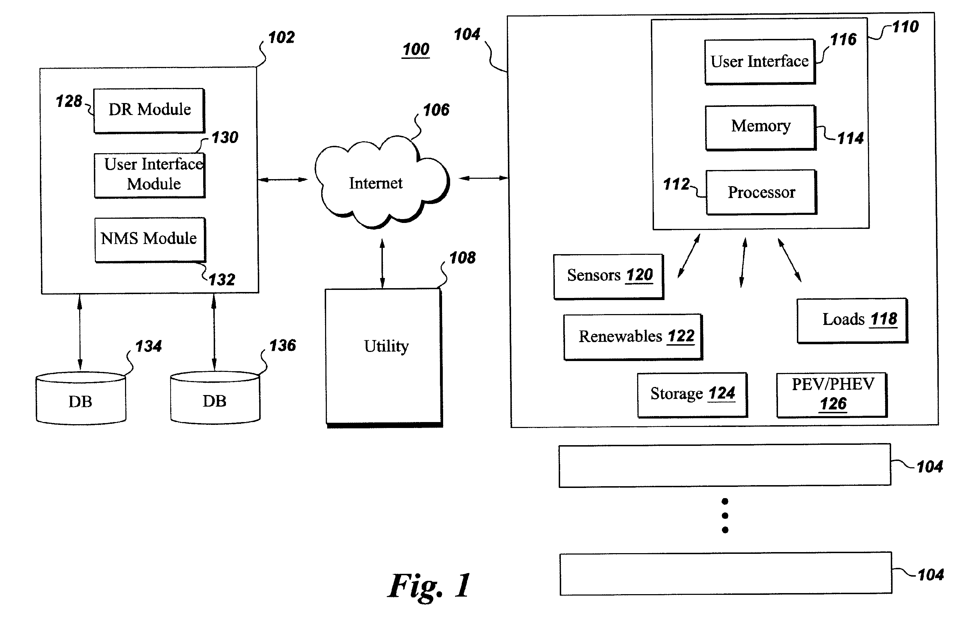

An exemplary energy management system according to an embodiment of the invention is shown in FIG. 1. The system 100 includes an energy management server 102, customer sites 104, and a utility 108. In order to facilitate the description of the embodiments of the invention, a single server 102 and a single utility source 108 are shown in FIG. 1. However, it should be understood that embodiments of the invention are not limited to these numbers, and that there can be any number of energy management servers, customer sites, service providers, and control centers in a utility network. In addition, the energy management server 102 can be arranged at and/or hosted by the utility 108 and/or by any other party.

Each customer site 104 includes an energy manager 110 having processor 112, a memory 114, and a user interface 116. The user interface 116 can include a keyboard or touch screen, for example, along with a display. The processor 112 runs programs for monitoring and controlling the operation of various customer devices such as loads 118, sensors 120, renewables 122, storage 124, and plug in electric vehicles (PEV) or plug in hybrid electric vehicles (PHEV) 126. The sensors 120 include meters, thermostats, occupancy sensors, humidity gauges, and other such devices. The renewable resources 122 can include solar and/or wind power devices, for example. The processor 112 controls the various components using any of a number of interfaces or protocols including Zigbee, Z-Wave, WiFi, or Homeplug, for example. Communication between the customer sites 104, the server 102, and the utility 108 occurs via a WAN (e.g., Internet) 106, WiMAX, broadband, AMI, and/or power line carriers, for example. Communication can also occur via a private network. Any suitable means for communication can be used.

The energy management server 102 includes a Demand Response (DR) module 128, a Network Management Services (NMS) Module 130, a user interface module 132, a customer database (DB) 134, and a program database (DB) 136. The NMS module 130 provides communication management and provisioning for the DR module 128, the customer sites 104 and the utility 108. The customer database 134 stores data such as historical data for each customer site in the network, for example. The historical data can include information on customer utility usage including load type, time of use (TOU), duration of use, shed or demand response events, for example. The customer usage information stored in the database 134 can be updated periodically (e.g., hourly, daily) with load data including hourly load and hourly price over a twenty four hour period, environmental data including weather information (e.g., temperature, humidity, wind speed, heating and cooling degrees, etc.) and date and time information such as day of the week, season, etc. In addition, the database 134 stores event data for each customer site. More specifically, the database 134 stores historical information on whether a customer site participated in a demand response event, the start time and end time, day of week, season, etc. In addition, the amount of load reduction and rebound are stored in database 134. Data related to response forecasting and expected future benefit calculations can also be stored in database 134. The program database 136 stores various applications and programs implemented by the energy management server 102. The user interface module 132 provides information to an operator.

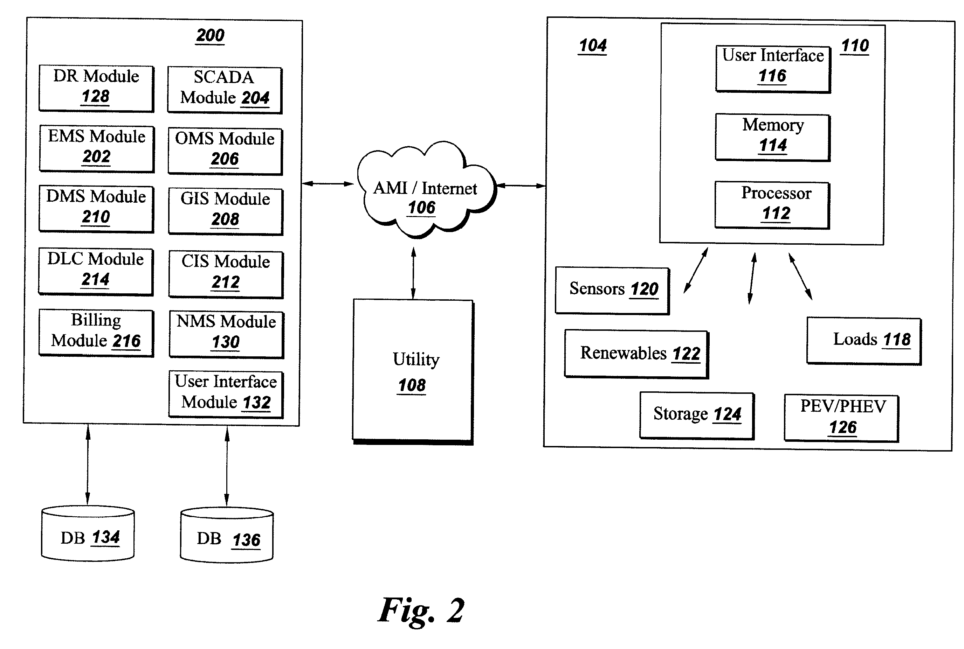

In an embodiment of the invention, the energy management server 102 can be arranged physically and/or logically at one or more utility control centers 200, as shown in FIG. 2. In addition, the utility control center 200 can include an energy management system (EMS) module 202 that performs load forecasting for the network, and monitors, controls, and optimizes the performance of the generation and transmission system. A Supervisory Control And Data Acquisition (SCADA) module 204 provides real time information at different points in the grid and also provides local controls. An Outage Management System (OMS) module 206 monitors load status information and outage restoration information for the customer sites 104 in the network. Some of the functions performed by the OMS module 206 include failure prediction, providing information on the extent of outages and impact to customers, and prioritizing restoration efforts. The OMS module 206 operates based on a detailed network model of the distribution system that is generated and maintained by a Geographic Information Systems (GIS) module 208. A Distribution Management System (DMS) module 210 provides real-time response to adverse or unstable network conditions by providing information on load status and load response. The DMS module 210 manages the response to alarms and/or events. Customer information including service contract information, participation in incentive and/or demand response programs, and contract price information, for example, is monitored and controlled by the Customer Information System (CIS) module 212. A Direct Load Control (DLC) module 214 controls and manages customer site devices such as the thermostat - HVAC, water heater, pool pump, washer, dryer, dishwasher, LCD / Plasma TV, plug loads (e.g., computers, computer peripherals / accessories, fax machine, power supplies), refrigerator, and lighting, for example. These are mostly discrete types of devices that have on/off, eco-mode/normal mode, or multiple discrete power saving modes (e.g., dimmable lighting). Customer billing is performed by the billing module 216.

According to embodiments of the invention, the DR module 128 utilizes information from the customer sites 104, the utility 108 and the databases 134 and 136, to determine whether to call a demand response event, which customer group or groups to include in the event and the time and duration of the event. Other functions of the DR module 128 can include response estimation, aggregation, disaggregation, contingency response, outage mitigation, demand dispatch, for example.

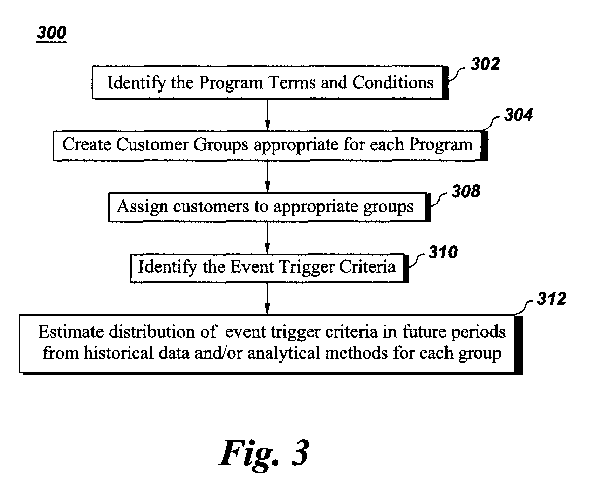

FIG. 3 shows a flow diagram for a grouping process 300 according to embodiments of the invention. In step 302, the DR module 128 utilizes information received from the customer sites 104, the utility 108, and information stored in the databases 134 and 136 to identify program terms and conditions for the demand response program under consideration. For example, the terms and conditions for a particular demand response program can include incentive payments and/or rate structures, the number of events per year per customer, the duration of events (e.g., the number of minutes, hours, etc.) per customer, the event windows (e.g., period of time, hours of day, etc.) during which an event can be invoked, as well as other event constraints (e.g., number of allowable consecutive days, etc.). In step 304, a number of customer groups are created for the program under consideration based upon certain customer attributes. For example, the system can create customer groups based on geography, types of appliances, load shed windows, event durations, rebound effect or patterns, or any other suitable basis. The customer groups should be phase balanced as well. In step 308, the customers participating in the program are grouped into the appropriate customer groups created in step 304. The customer groups will be created for each DR program offered by the utility. The number of groups and the number of customers in each group will vary depending on customer participation in the programs. In some embodiments, a customer could belong to multiple customer groups across various programs. In step 310, an event trigger criteria is identified for the program from step 302. For example, an event trigger criteria (representing marginal benefits) for a particular demand response program can include generation cost savings, temperature, reserve margins, and/or any other suitable parameter that measures or represents the value of a DR event to the utility. Step 312 provides for estimating the distribution of each group's event trigger criteria in future periods of time based upon historical data and/or analytical methods, such as any suitable forecasting method. For example, if the event trigger criteria is temperature, the temperature distribution for a future period of time is determined based on historical data or other forecasting method. The information in 312 can be used to calculate a threshold value (i.e., expected future benefits) such that the DR event can be invoked if the event trigger criteria for a group reaches its threshold value. The methodology disclosed in U.S. Patent application Serial No. 12/646,012, filed on Dec. 23, 2009 (entitled, "Method and System for Demand Response Management in a Network") explains how the threshold value may be determined using the information in 312. Other analytical methodologies can be used to determine this value. Expert judgment may also be used to estimate threshold value.

While embodiments of the invention are described with respect to one demand response program, it is to be understood that embodiments of the invention also apply to multiple programs that may be offered and the groupings can change based upon the various programs.

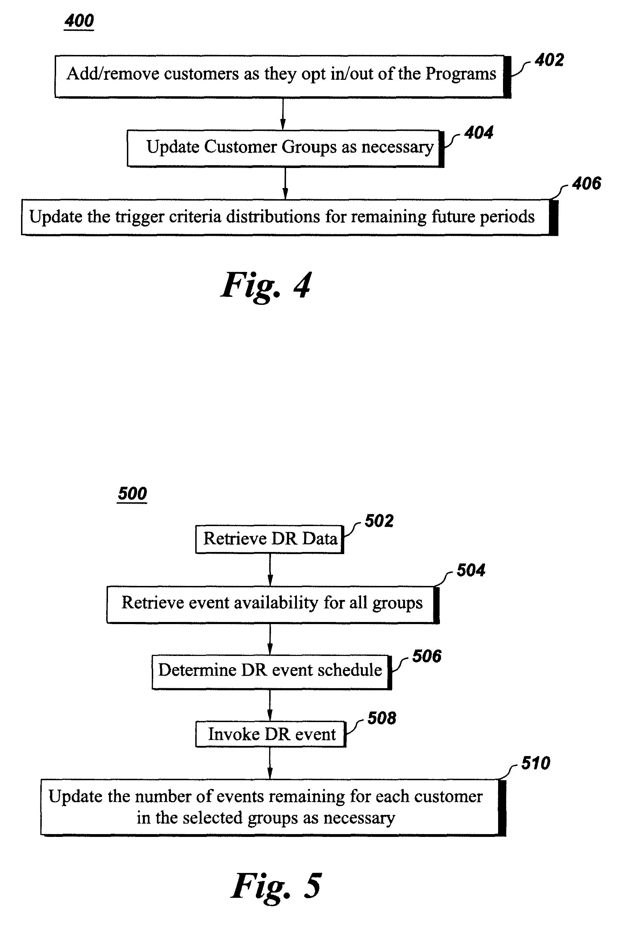

FIG. 4 is a flow diagram illustrating an updating process 400 according to embodiments of the present invention. In step 402, customers are added or removed from the customer groups as they opt in and out of one or more of the utility programs. The customer groups are updated appropriately in step 404. In step 406, the program criteria such as the remaining number of allowable events and the distribution of the event trigger in future periods, for example, are recomputed or updated.

FIG. 5 shows a flow diagram of a demand response event invocation process 500 according to an exemplary embodiment of the present invention. In step 502, demand response (DR) data is retrieved along with other data relevant to the event trigger criteria. For example, DR data can include load forecast information for a DR program based on generation costs, or contingency data such as desired load curtailment over a certain period for a DR program based on contingency events. Sources for this information include the customer database 134, program database 136, DR module 128, EMS module 202, DMS module 210, NMS module 130, and AMI / Internet among others. In step 504, event availability information for each of the groups created for the program is retrieved. The demand response schedule is determined in step 506. More particularly, the groups to be included and the time and the duration for each group is determined and scheduled for the demand response event. In step 508, the demand response event is called or invoked. In step 510, the number of remaining events and durations for each group is updated as necessary.

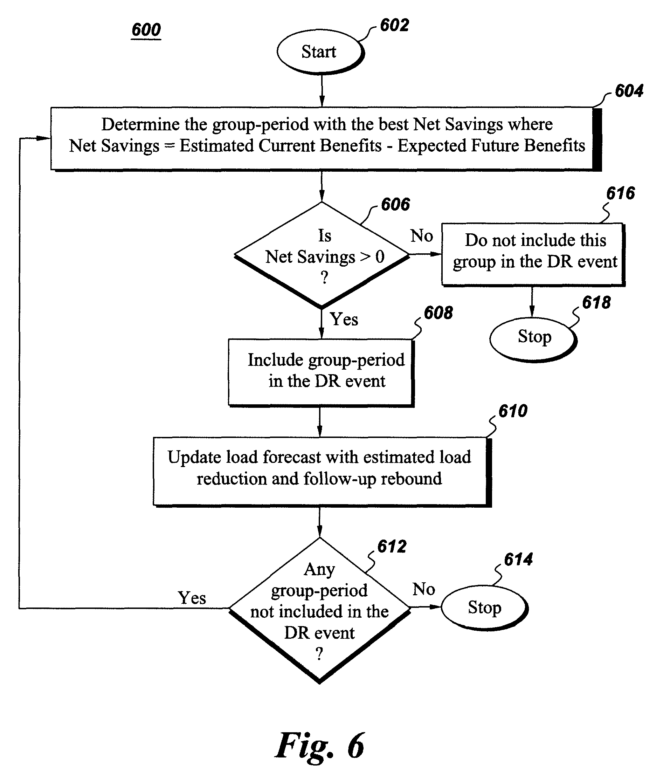

FIG. 6 shows a flow diagram for determining the demand response schedule of step 506. The process 600 starts in step 602. In step 604, the time period that results in the optimal benefit for the group's event trigger criteria is determined for each group. The optimal time period to assign to the group can be solved using Operations Research methodologies such as dynamic programming, stochastic math programming, and simulation, for example. Additionally, the future benefit value of the event trigger criteria for each group is calculated. This future benefit value is based on using the opportunity at a future period and uses the distribution of the event trigger criteria over future time periods. The future benefit value for a group can be considered the option value or threshold for invoking the event at the current time. The option value or threshold value can be determined using any number of analytical methodologies including the methodology disclosed in U.S. Patent application Serial No. 12/646,012, filed on Dec. 23, 2009 (entitled, "Method and System for Demand Response Management in a Network"). In step 604, we also calculate the net savings for each group as the difference between the current estimated benefit value and the future expected benefit value from invoking a DR event for the group. The customer group with the largest net savings is then identified. In step 606, it is determined whether the net savings value is greater than 0. If the answer in step 606 is yes, then it implies that it is beneficial to use a DR event for this customer group now rather than save it for a later date. Therefore, processing continues to step 608 and the group is selected to be invoked for the current DR event. In step 610, the DR data is updated with the estimated response and rebound profile for the selected group, and processing continues to step 612. In step 612, it is determined whether there are any customer groups that have not yet been included in the DR event. If the answer in step 612 is no, then processing stops at step 614. If the answer in step 612 is yes, then processing returns to step 604. In this iteration of processing the customer groups, the updated DR data is used and only those groups are considered that have not yet been included in the DR event. If the net savings value in step 606 is not greater than 0, then processing continues to step 616 and the group is not included in the DR event for the identified time period. The process stops in step 618.

FIG. 6 illustrates an exemplary embodiment where the group selection occurs together with the time period selection. However, embodiments of the invention can also be implemented where the group selection occurs prior to the time period selection. The grouping and selection process can be implemented in any suitable manner.

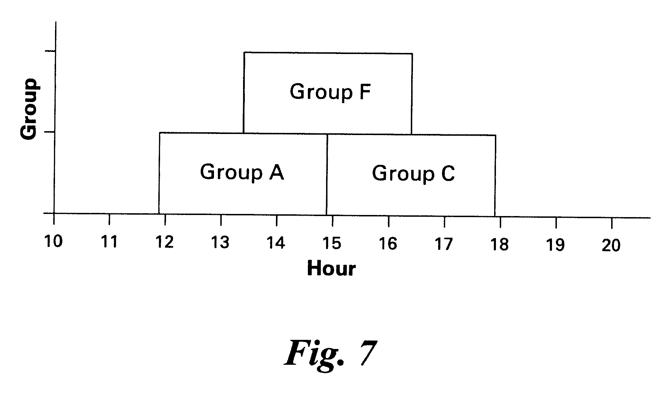

FIG. 7 illustrates an example of what the result of the demand response scheduling process may look like. In the example shown, three groups A, C and F are selected for particular times and durations in order to optimize the use of a demand response event according to an exemplary embodiment of the present invention.

Although embodiments of the invention have been described with reference to processing of a single demand response program, the invention is not limited in this regard. The grouping and scheduling according to embodiments of the present invention can be performed for multiple programs based on different event trigger criteria.

The energy management system and method according to embodiments of the invention allow utilities or service providers to optimize the scheduling and dispatch of demand response events. Embodiments of the invention determine the optimal selection of customers to include in the demand response event as well as the times and durations for each event.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A system, comprising:
   a database to store demand response data;
   a demand response module to group customers into customer groups based on the demand response data, and to schedule one or more of the customer groups for a demand response event based on the demand response data and forecast data; and
   a controller to implement the demand response event for the one or more customer groups scheduled for the demand response event.
2. The system of clause 1, further comprising:
   a monitor computer to monitor power grid operations.
3. The system of clause 1 or clause 2, wherein the demand response module establishes the customer groups based on demand response program parameters for at least one demand response program.
4. The system of any preceding clause, wherein the demand response module assigns the customers into the customer groups based on the demand response data.
5. The system of any preceding clause, wherein the demand response data includes at least one of demand response program parameters, load and demand characteristics of the customers, rebound parameters of the customers, or customer attributes including geographic location, power phase, types of appliances, and load shed windows.
6. The system of any preceding clause, wherein the forecast data includes at least one of weather data, price data, or load data.
7. A method, comprising:
   receiving demand response data;
   grouping customers into customer groups based on the demand response data;
   scheduling one or more of the customer groups for a demand response event based on the demand response data and forecast data;
   notifying the one or more customer groups of the demand response event; and
   implementing the demand response event for the one or more customer groups.
8. The method of clause 7 further comprising:
   determining program parameters for each available demand response program from the demand response data;
   establishing the customer groups for each available demand response program; and
   assigning the customers to the customer groups based on the demand response data.
9. The method of clause 7 or clause 8, wherein each of the customers belongs to at least one of the customer groups.
10. The method of any of clauses 7 to 9, further comprising:
   identifying a demand response program from available demand response programs;
   identifying an event trigger criteria for the demand response program; and
   estimating a distribution of the event trigger criteria in future periods of time.
11. The method of any of clauses 7 to 10, further comprising:
   updating the customer groups and the distribution as a number of customers changes.
12. The method of any of clauses 7 to 11, further comprising:
   determining a customer group from the customer groups corresponding to optimal performance benefits based on a difference between a current benefit of including the customer group in the demand response event and an estimated future benefit of saving the customer group for inclusion in a future demand response event;
   comparing the optimal performance benefits of the customer group with a predetermined threshold; and
   selecting the customer group for the demand response event when the optimal performance benefits are greater than the predetermined threshold.
13. The method of any of clauses 7 to 12, further comprising:
   updating utility forecast information based on an estimated use reduction and rebound corresponding to the customer group selected for the demand response event.
14. The method of any of clauses 7 to 13, further comprising:
   repeating the determining, comparing and selecting process until all of the customer groups are processed.
15. A computer-readable medium comprising computer-readable instructions of a computer program that, when executed by a processor, cause the processor to perform a method, the method comprising:
   receiving demand response data;
   grouping customers into customer groups based on the demand response data;
   scheduling one or more of the customer groups for a demand response event based on the demand response data and forecast data;
   notifying the one or more customer groups of the demand response event; and
   implementing the demand response event for the one or more customer groups.
16. The computer-readable medium of clause 15, the method further comprising:
   determining program parameters for each available demand response program from the demand response data;
   establishing the customer groups for each available demand response program; and
   assigning the customers to the customer groups based on the demand response data.
17. The computer-readable medium of clause 15 or clause 16, wherein each of the customers belongs to at least one of the customer groups.
18. The computer-readable medium of any of clauses 15 to 17, the method further comprising:
   identifying a demand response program from available demand response programs;
   identifying an event trigger criteria for the demand response program; and
   estimating a distribution of the event trigger criteria in future periods of time.
19. The computer-readable medium of any of clauses 15 to 18, the method further comprising:
   updating the customer groups and the event trigger criteria distribution as a number of customers changes.
20. The computer readable medium of any of clauses 15 to 19, the method further comprising:
   determining a customer group from the customer groups corresponding to optimal performance benefits based on a difference between a current benefit of including the customer group in the demand response event and an estimated future benefit of saving the customer group for inclusion in a future demand response event;
   comparing the optimal performance benefits of the customer group with a predetermined threshold; and
   selecting the customer group for the demand response event when the optimal performance benefits are greater than the predetermined threshold.
21. The computer-readable medium of any of clauses 15 to 20, the method further comprising:
   updating utility forecast information based on an estimated use reduction and rebound corresponding to the customer group selected for the demand response event.
22. The computer-readable medium of any of clauses 15 to 21, further comprising:
   repeating the determining, comparing and selecting process until all of the customer groups are processed.

## Claims

1. A system, comprising:
a database to store demand response data (134, 136);
a demand response module (128) to group customers into customer groups based on the demand response data, and to schedule one or more of the customer groups for a demand response event based on the demand response data and forecast data; and
a controller (102) to implement the demand response event for the one or more customer groups scheduled for the demand response event.

2. The system of claim 1, further comprising:
a monitor computer (200) to monitor power grid operations.

3. The system of claim 1 or claim 2, wherein the demand response module (128) establishes the customer groups based on demand response program parameters for at least one demand response program.

4. The system of any preceding claim, wherein the demand response module (128) assigns the customers into the customer groups based on the demand response data.

5. The system of any preceding claim, wherein the demand response data includes at least one of demand response program parameters, load and demand characteristics of the customers, rebound parameters of the customers, or customer attributes including geographic location, power phase, types of appliances, and load shed windows.

6. The system of any preceding claim, wherein the forecast data includes at least one of weather data, price data, or load data.

7. A method, comprising:
receiving demand response data;
grouping customers into customer groups based on the demand response data;
scheduling one or more of the customer groups for a demand response event based on the demand response data and forecast data;
notifying the one or more customer groups of the demand response event; and
implementing the demand response event for the one or more customer groups.

8. The method of claim 7 further comprising:
determining program parameters for each available demand response program from the demand response data;
establishing the customer groups for each available demand response program; and
assigning the customers to the customer groups based on the demand response data.

9. The method of claim 7 or claim 8, wherein each of the customers belongs to at least one of the customer groups.

10. The method of any of claims 7 to 9, further comprising:
identifying a demand response program from available demand response programs;
identifying an event trigger criteria for the demand response program; and
estimating a distribution of the event trigger criteria in future periods of time.

11. The method of any of claims 7 to 10, further comprising:
updating the customer groups and the distribution as a number of customers changes.

12. The method of any of claims 7 to 11, further comprising:
determining a customer group from the customer groups corresponding to optimal performance benefits based on a difference between a current benefit of including the customer group in the demand response event and an estimated future benefit of saving the customer group for inclusion in a future demand response event;
comparing the optimal performance benefits of the customer group with a predetermined threshold; and
selecting the customer group for the demand response event when the optimal performance benefits are greater than the predetermined threshold.

13. The method of any of claims 7 to 12, further comprising:
updating utility forecast information based on an estimated use reduction and rebound corresponding to the customer group selected for the demand response event.

14. The method of any of claims 7 to 13, further comprising:
repeating the determining, comparing and selecting process until all of the customer groups are processed.

15. A computer-readable medium comprising computer-readable instructions of a computer program that, when executed by a processor, cause the processor to perform a method, the method comprising:
receiving demand response data;
grouping customers into customer groups based on the demand response data;
scheduling one or more of the customer groups for a demand response event based on the demand response data and forecast data;
notifying the one or more customer groups of the demand response event; and
implementing the demand response event for the one or more customer groups.
